# EUROPÄISCHE PATENTSCHRIFT

(11) **EP 2 219 912 B1**
(45) Veröffentlichungstag und Bekanntmachung des Hinweises auf die Patenterteilung: **05.03.2014**
(21) Anmeldenummer: 08804593.5
(22) Anmeldetag: 23.09.2008
(51) Int. Cl.: B60T 8/36, F16K 31/06

(54) **VENTILPATRONE FÜR EIN MAGNETVENTIL UND ZUGEHÖRIGES MAGNETVENTIL**
VALVE CARTRIDGE FOR A SOLENOID VALVE, AND ASSOCIATED SOLENOID VALVE
CARTOUCHE POUR UNE ÉLECTROVANNE ET ÉLECTROVANNE CORRESPONDANTE

(30) Priorität: 08.11.2007 DE 102007053301
(43) Veröffentlichungstag der Anmeldung: 25.08.2010
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2008/062674
(87) Internationale Veröffentlichungsnummer: WO 2009/059844

(56) Entgegenhaltungen:
- EP-A- 1 810 902
- WO-A-2007/033856
- WO-A-2008/058803

## Beschreibung

### Stand der Technik

Die Erfindung betrifft eine Ventilpatrone für ein Magnetventil nach der Gattung des unabhängigen Patentanspruchs 1, und ein zugehöriges Magnetventil.

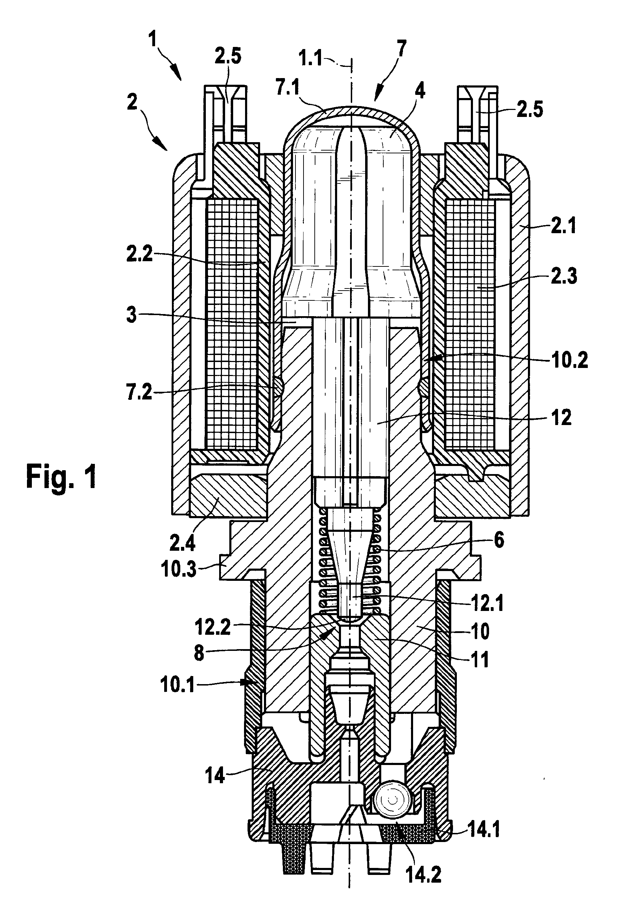

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliche Magnetventil 1, das beispielsweise als stromlos offenes Regelventil ausgeführt ist, eine Magnetbaugruppe 2 zur Erzeugung eines Magnetflusses, die einen Gehäusemantel 2.1, einen Wicklungsträger 2.2, eine Spulenwicklung 2.3 und eine Abdeckscheibe 2.4 umfasst, und eine Ventilpatrone 7, die eine Kapsel 7.1, einen mit einem ersten Ende 10.2 in die Kapsel 7.1 eingeschobenen Ventileinsatz 10, der zusätzlich über eine Dichtschweißung 7.2 mit der Kapsel 7.1 verbundenen ist, einen Magnetanker 4 mit einem Stößel 12 und eine Rückstellfeder 6 umfasst. Die Magnetbaugruppe 2 erzeugt durch eine Bestromung der Spulenwicklung 2.3 über elektrischen Anschlüsse 2.5 eine Magnetkraft, die den längsbeweglichen Magnetanker 4 mit dem Stößel 12, der ein Schließelement 12.1 mit einem Hauptdichtelement 12.2 umfasst, entgegen der Kraft der Rückstellfeder 6 gegen den Ventileinsatz 10 bewegt. Der Ventileinsatz 10 leitet den von der Magnetbaugruppe 2 über die Abdeckscheibe 2.4 eingeleiteten Magnetfluss axial über einen Luftspalt 3 in Richtung Magnetanker 4.

Zudem nimmt der Ventileinsatz 10 an einem zweiten Ende 10.1 den so genannten Ventilkörper 11 auf, der einen Hauptventilsitz 8 umfasst, in welchen das als Dichtkalotte ausgeführte Hauptdichtelement 12.2 dichtend eintaucht, um die Dichtfunktion des Magnetventils 1 umzusetzen. Zur Verstemmung mit einem Fluidblock ist an den Ventileinsatz 10 ein Verstemmflansch 10.3 angeformt. Wie weiter aus Figur 1 ersichtlich ist, wird an den Ventileinsatz 10 axial ein Ventilunterteil 14 angelegt und abgestützt, das ein exzentrisch zur Ventilhauptachse 1.1 angeordnetes Rückschlagventil 14.2 umfasst. Das beispielsweise als Kunststoffeinsatz ausgeführte Ventilunterteil 14 dient zusätzlich zur Abdichtung zu einem umgebenden Fluidblock, zur Abdichtung zum Ventilkörper 11 und zur Aufnahme eines Flachfilters 14.1.

Solch ein Ventil findet man in der den Oberbegriff des Anspruchs 1 bildenden W02007/033856 A1.

### Offenbarung der Erfindung

Die erfindungsgemäße Ventilpatrone für ein Magnetventil mit den Merkmalen des unabhängigen Patentanspruchs 1 hat demgegenüber den Vorteil, dass ein Ventileinsatz als geschlitzte Hülse ausgeführt ist, wobei an einem Ende des Ventileinsatzes, in welches ein Ventilkörper eingepresst ist, ein Kragen angeformt ist, um einen Außendurchmesser und eine Gestaltfestigkeit des Ventileinsatzes zu vergrößern. Durch die Anformung des Kragens werden der Außendurchmesser und die Gestaltfestigkeit des Ventileinsatzes vergrößert, so dass der Ventileinsatz in vorteilhafter Weise in der Lage ist, radial wirkende Einpresskräfte ohne Zusatzbauteile und ohne unzulässige Aufweitung aufzunehmen, die entstehen, wenn der Ventilkörper in das Ende des als geschlitzte Hülse ausgeführten Ventileinsatzes eingepresst wird. Als weiterer Vorteil ergibt sich durch den angeformten Kragen eine vergrößerte Auflagefläche für ein axial an den Ventileinsatz angelegtes und abgestütztes Ventilunterteil. Zudem kann eine Einführkante für den Ventilkörper beispielsweise durch einen ausgebildeten Radius günstiger für eine spanlose Montage des Ventilkörpers ausgeführt werden.

Durch die in den abhängigen Ansprüchen aufgeführten Maßnahmen und Weiterbildungen sind vorteilhafte Verbesserungen der im unabhängigen Patentanspruch 1 angegebenen Ventilpatrone möglich.

Besonders vorteilhaft ist, dass der angeformte Kragen des Ventileinsatzes mit Verbindungsmitteln ausgeführt ist, um die beiden Seiten des als geschlitzte Hülse ausgeführten Ventileinsatzes im Bereich des angeformten Kragens miteinander zu verbinden. Durch diese Verbindungsmittel werden in vorteilhafter Weise die Stabilität und die Gestaltfestigkeit des Kragens vergrößert, so dass eine Aufweitung auch bei starken Einpresskräften verhindert werden kann. Die Verbindungsmittel können auf einer Seite des Schlitzes beispielsweise als Zapfen und auf einer anderen Seite des Schlitzes beispielsweise als korrespondierende Bohrung zur Aufnahme des Zapfens ausgeführt werden. Alternativ können die beiden Seiten des Schlitzes beispielsweise als überlappende Verbindungsmittel ausgeführt werden. Hierbei weist eine Oberseite beispielsweise eine Rastnase und eine Rastvertiefung auf, welche mit einer korrespondierenden Rastnase und einer korrespondierenden Rastvertiefung einer Unterseite zusammenwirken. Durch eine solche "Verzahnung" der beiden Schlitzseiten kann die Stabilität des angeformten Kragens des Ventileinsatzes in vorteilhafter Weise ebenfalls erhöht werden.

In Ausgestaltung der erfindungsgemäßen Ventilpatrone kann die Außenkontur des angeformten Kragens kreisförmig oder wellenförmig ausgeführt werden. Zusätzlich oder alternativ kann die Form des Kragens auch aus der Ebene herausragen, so dass sich ein gewellter, umlaufender Kragen mit freier Geometrie in der Draufsicht ergibt. Durch diese zusätzliche Formgebung können in vorteilhafter Weise positive Effekte für die Gestaltfestigkeit des Kragens erzielt werden.

Die erfindungsgemäße Ventilpatrone kann beispielsweise in stromlos offenen oder geschlossenen Magnetventilen verwendet werden.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine schematische Schnittdarstellung von erfindungswesentlichen Komponenten einer Ventilpatrone für ein Magnetventil.
Fig. 3 zeigt eine schematische Schnittdarstellung einer ersten Ausführungsform der erfindungsgemäßen Ventilpatrone ohne Ventilunterteil entlang der Schnittlinie III-III ohne aus Fig. 2.
Fig. 4 zeigt eine schematische Darstellung einer Seitenansicht der ersten Ausführungsform der erfindungsgemäßen Ventilpatrone ohne Ventilunterteil in Pfeilrichtung IV aus Fig. 2.
Fig. 5 zeigt eine schematische Schnittdarstellung einer zweiten Ausführungsform der erfindungsgemäßen Ventilpatrone ohne Ventilunterteil entlang der Schnittlinie V-V aus Fig. 2.
Fig. 6 zeigt eine schematische Darstellung einer Seitenansicht einer dritten Ausführungsform der erfindungsgemäßen Ventilpatrone ohne Ventilunterteil in Pfeilrichtung VI aus Fig. 2.
Fig. 7 zeigt eine schematische Schnittdarstellung einer vierten Ausführungsform der erfindungsgemäßen Ventilpatrone olme Ventilunterteil entlang der Schnittlinie VII-VII aus Fig. 2.
Fig. 8 zeigt eine schematische Darstellung einer Seitenansicht einer fünften Ausführungsform der erfindungsgemäßen Ventilpatrone ohne Ventilunterteil in Pfeilrichtung VIII aus Fig. 2.

### Ausführungsformen der Erfindung

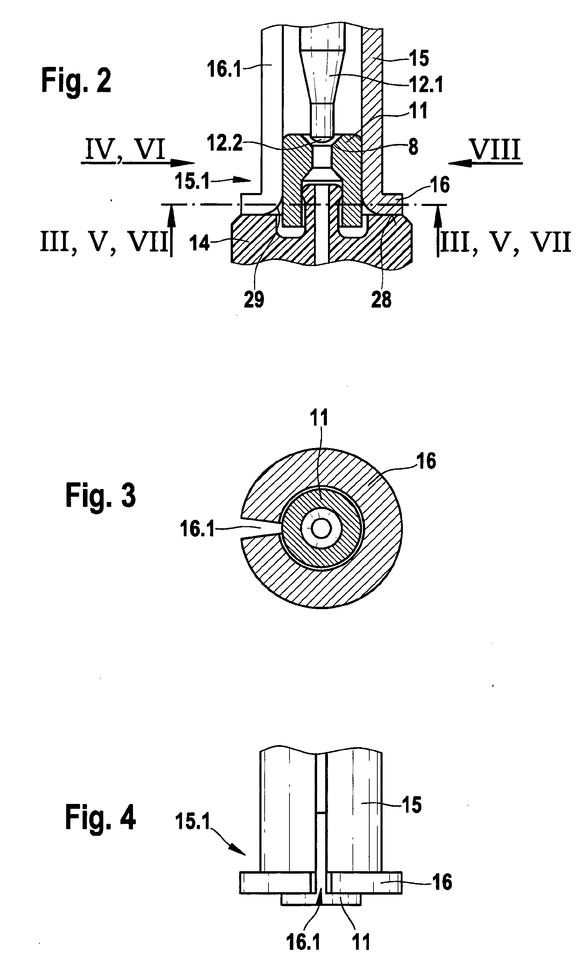

Wie aus Fig. 2 bis 4 ersichtlich ist, ist ein Ventileinsatz 15 für eine erfindungsgemäße Ventilpatrone im Unterschied zum Ventileinsatz 10 der herkömmlichen Ventilpatrone 7 gemäß Fig. 1 als geschlitzte Hülse ausgeführt, in die an einem Ende 15.1 ein Ventilkörper 11 eingepresst ist, der einen Hauptventilsitz 8 aufweist. Mit dem anderen nicht dargestellten Ende ist der Ventileinsatz 15 in eine nicht dargestellte Kapsel eingeschoben. Der Ventilkörper 11 mit dem Hauptventilsitz 8 kann beispielsweise ähnlich wie der Ventilkörper 11 der herkömmlichen Ventilpatrone 7 gemäß Fig. 1 ausgeführt werden. Innerhalb des Ventileinsatzes 15 ist ein Stößel längsbeweglich geführt, der ein Schließelement 12.1 mit einem Dichtelement 12.2 aufweist, das zur Ausführung einer Dichtfunktion dichtend in den Hauptventilsitz 8 des Ventilkörpers 11 eintaucht. Der Stößel kann analog zum Stößel der herkömmlichen Ventilpatrone 7 gemäß Fig. 1 ausgeführt werden und durch einen von einer erzeugten Magnetkraft bewegten Magnetanker 4 innerhalb des Ventileinsatzes 15 bewegt werden.

Wie weiter aus Fig. 2 bis 4 ersichtlich ist, ist an das dargestellte Ende 15.1 des Ventileinsatzes 15 gemäß einem ersten Ausführungsbeispiel ein kreisförmiger Kragen 16 mit einem Schlitz 16.1 angeformt, um einen Außendurchmesser und eine Gestaltfestigkeit des Ventileinsatzes 15 zu vergrößern. Durch die Anformung des kreisförmigen Kragens 16 werden der Außendurchmesser und die Gestaltfestigkeit des als geschlitzte Hülse ausgeführten Ventileinsatzes 15 vergrößert, so dass der Ventileinsatz 15 in vorteilhafter Weise in der Lage ist, radial wirkende Einpresskräfte ohne Zusatzbauteile und ohne unzulässige Aufweitung aufzunehmen, wobei die Einpresskräfte entstehen, wenn der Ventilkörper 11 in das dargestellte Ende 15.1 des als geschlitzte Hülse ausgeführten Ventileinsatzes 15 eingepresst wird. Zudem wird durch den angeformten Kragen 16 eine Auflagefläche 28 für ein axial an den Ventileinsatz 15 angelegtes Ventilunterteil 14 vergrößert, das zudem am Ventileinsatz 15 abgestützt ist. Das Ventilunterteil 14 ist beispielsweise analog zum herkömmlichen Magnetventil 1 gemäß Fig. 1 als Kunststoffeinsatz ausgeführt und dient beispielsweise zusätzlich zur Aufnahme eines Rückschlagventils, zur Abdichtung zu einem umgebenden Fluidblock, zur Abdichtung zum Ventilkörper 11 und zur Aufnahme eines Flachfilters. Des Weiteren kann durch die Anformung des Kragens 16 an den als Hülse ausgeführten Ventileinsatz 15 eine Einführkante 29 für den Ventilkörper 11 als Radius ausgeführt werden, wodurch eine spanlose Montage des Ventilkörpers 11 ermöglicht wird.

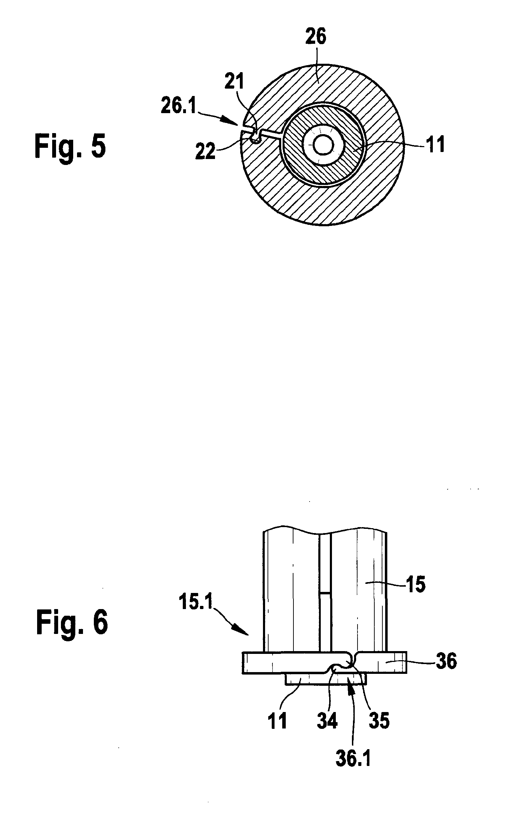

Wie aus Fig. 5 und 6 ersichtlich ist, kann der angeformte Kragen 26, 36 des Ventileinsatzes 15 gemäß weiteren Ausführungsformen mit Verbindungsmitteln ausgeführt werden, um die beiden Seiten des als geschlitzte Hülse ausgeführten Ventileinsatzes 15 im Bereich des angeformten Kragens 26 bzw. 36 miteinander zu verbinden. Durch die Verbindungsmittel werden die Stabilität und die Gestaltfestigkeit des Kragens 26, 36 in vorteilhafter Weise vergrößert, so dass eine Aufweitung des als Hülse ausgeführten Ventileinsatzes 15 auch bei starken Einpresskräften verhindert werden kann.

Wie aus Fig. 5 weiter ersichtlich ist, sind die Verbindungsmittel gemäß einem zweiten Ausführungsbeispiel des an den Ventileinsatz 15 angeformten Kragens 26 auf einer Seite des Schlitzes 26.1 als Zapfen 21 und auf einer anderen Seite des Schlitzes 26.1 als korrespondierende Bohrung 22 zur Aufnahme des Zapfens 21 ausgeführt.

Wie aus Fig. 6 weiter ersichtlich ist, sind die beiden Seiten des Schlitzes 36.1 gemäß einem dritten Ausführungsbeispiel des an den Ventileinsatz 15 angeformten Kragens 36 als überlappende Verbindungsmittel ausgeführt. Hierbei weist eine Oberseite 35 der überlappenden Verbindungsmittel eine Rastnase und eine Rastvertiefung auf, welche mit einer korrespondierenden Rastnase und einer korrespondierenden Rastvertiefung einer Unterseite 34 der überlappenden Verbindungsmittel zusammenwirken. Durch die Verzahnung der beiden Schlitzseiten kann die Stabilität des Kragens 36 des Ventileinsatzes 15 ebenfalls erhöht werden.

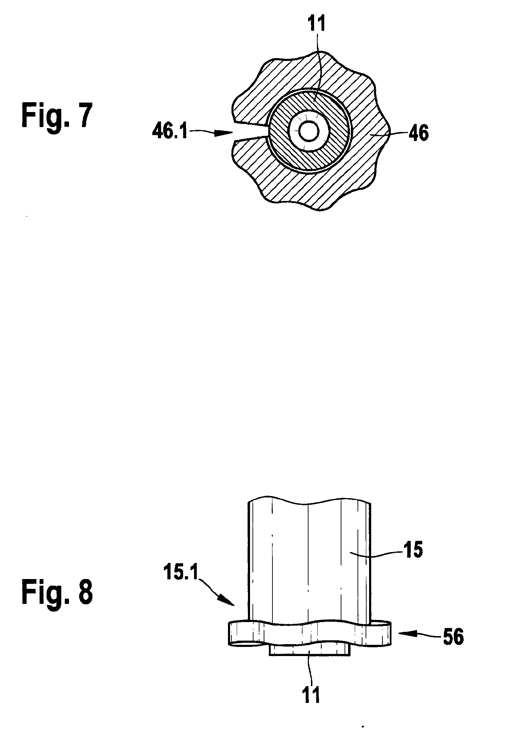

Wie aus Fig. 7 und 8 ersichtlich ist, kann die Formgebung des an den Ventileinsatz 15 angeformten Kragens 46, 56 gemäß weiteren Ausführungsformen so erfolgen, dass sich positive Effekte für die Gestaltfestigkeit des Kragens 46, 56 ergeben. Wie aus Fig. 7 weiter ersichtlich ist, ist die Außenkontur des angeformten geschlitzten Kragens 46 gemäß einem vierten Ausführungsbeispiel wellenförmig ausgeführt. Im dargestellten vierten Ausführungsbeispiel sind beiden Seiten des Schlitzes 46.1 im angeformten Kragen 46 nicht über Verbindungsmittel miteinander verbunden. Bei einer nicht dargestellten Ausführungsform des angeformten Kragens mit wellenförmiger Außenkontur sind Verbindungsmittel vorhanden, um die beiden Seiten des Schlitzes im angeformten Kragen miteinander zu verbinden. Wie aus Fig. 8 weiter ersichtlich ist, ist der angeformte Kragen 56 mit einer aus der Ebene herausragenden Form ausgeführt ist, so dass sich ein gewellter, umlaufender Kragen 56 mit einer freien Geometrie in der Draufsicht ergibt.

Die Verbindungsmittel 21, 22, 34, 35 können vor oder während des Einpressens des Ventilkörpers 11 in den Ventileinsatz 15 an den Kragen 26 bzw. 36 angeformt werden. Zudem kann die zusätzliche Formgebung des Kragens 46 bzw. 56 je nach Zweckmäßigkeit direkt bei der Herstellung des Ventileinsatzes 15 oder während des Einpressens des Ventilkörpers 11 in den Ventileinsatz 15 zur Abstützung der Einpresskräfte erfolgen.

Die erfindungsgemäße Ventilpatrone für ein Magnetventil mit dem als geschlitzte Hülse ausgeführten Ventileinsatz ermöglicht durch den angeformten Kragen in vorteilhafter Weise die Aufnahme der Einpresskräfte des Ventilkörpers ohne Zusatzbauteile. Durch die von dem angeformten Kragen bewirkte Vergrößerung des Außendurchmessers des Ventileinsatzes wird die Gestaltfestigkeit des Ventileinsatzes erhöht, so dass die Einpresskräfte für den Ventilkörper ohne unzulässige Aufweitung aufgenommen werden können.

## Patentansprüche

1. Ventilpatrone (7) für ein Magnetventil (1) mit einer Kapsel (7.1), einem innerhalb der Kapsel (7.1) beweglich geführten Magnetanker (4), einem Ventileinsatz (15), der mit einem ersten Ende in die Kapsel (7.1) eingeschoben ist, und einem Ventilkörper (11), der in ein zweites Ende (15.1) des Ventileinsatzes (15) eingepresst ist und einen Hauptventilsitz (8) aufweist, wobei der von einer erzeugten Magnetkraft bewegte Magnetanker (4) einen innerhalb des Ventileinsatzes (15) geführten Stößel (12) bewegt, der ein Schließelement (12.1) mit einem Dichtelement (12.2) aufweist, und wobei das Dichtelement (12.2) zur Ausführung einer Dichtfunktion dichtend in den Hauptventilsitz (8) des Ventilkörpers (11) eintaucht, **dadurch gekennzeichnet, dass** der Ventileinsatz (15) als geschlitzte Hülse ausgeführt ist, wobei an das zweite Ende (15.1) des Ventileinsatzes (15) ein Kragen (16, 26, 36, 46, 56) angeformt ist, um einen Außendurchmesser und eine Gestaltfestigkeit des Ventileinsatzes (15) zu vergrößern.

2. Ventilpatrone nach Anspruch 1, **dadurch gekennzeichnet, dass** ein Ventilunterteil (14) axial an den Ventileinsatz (15) angelegt und abgestützt ist.

3. Ventilpatrone nach Anspruch 1 oder 2, **dadurch gekennzeichnet, dass** am zweiten Ende (15.1) des Ventileinsatzes (15) eine Einführkante (29) für den Ventilkörper (11) als Radius ausgeführt ist.

4. Ventilpatrone nach einem der Ansprüche 1 bis 3, **dadurch gekennzeichnet, dass** der angeformte Kragen (26, 36) des Ventileinsatzes (15) mit Verbindungsmitteln (21, 22, 34, 35) ausgeführt ist, um die beiden Seiten des als geschlitzte Hülse ausgeführten Ventileinsatzes (15) im Bereich des angeformten Kragens (26, 36) miteinander zu verbinden.

5. Ventilpatrone nach Anspruch 4, **dadurch gekennzeichnet, dass** die Verbindungsmittel auf einer Seite des Schlitzes (26.1) als Zapfen (21) und auf einer anderen Seite des Schlitzes (26.1) als korrespondierende Bohrung (22) zur Aufnahme des Zapfens (21) ausgeführt sind.

6. Ventilpatrone nach Anspruch 4, **dadurch gekennzeichnet, dass** die beiden Seiten des Schlitzes (36.1) als überlappende Verbindungsmittel ausgeführt sind, wobei eine Oberseite (35) eine Rastnase und eine Rastvertiefung aufweist, welche mit einer korrespondierenden Rastnase und einer korrespondierenden Rastvertiefung einer Unterseite (34) zusammenwirken.

7. Ventilpatrone nach einem der Ansprüche 1 bis 6, **dadurch gekennzeichnet, dass** die Außenkontur des angeformten Kragens (16, 26, 36, 46, 56) kreisförmig oder wellenförmig ausgeführt ist.

8. Ventilpatrone nach einem der Ansprüche 1 bis 7, **dadurch gekennzeichnet, dass** der angeformte Kragen (56) mit einer aus der Ebene herausragenden Form ausgeführt ist, so dass sich ein gewellter, umlaufender Kragen (56) mit freier Geometrie in der Draufsicht ergibt.

9. Magnetventil **gekennzeichnet durch** eine Ventilpatrone nach einem der Ansprüche 1 bis 8.

## Claims

1. Valve cartridge (7) for a solenoid valve (1) having a capsule (7.1), a magnet armature (4) which is guided movably within the capsule (7.1), a valve insert (15) which is pushed with a first end into the capsule (7.1), and a valve body (11) which is pressed into a second end (15.1) of the valve insert (15) and has a main valve seat (8), the magnet armature (4) which is moved by a generated magnetic force moving a tappet (12) which is guided within the valve insert (15) and has a closing element (12.1) with a sealing element (12.2), and the sealing element (12.2) dipping sealingly into the main valve seat (8) of the valve body (11) in order to perform a sealing function, **characterized in that** the valve insert (15) is configured as a slotted sleeve, a collar (16, 26, 36, 46, 56) being moulded integrally onto the second end (15.1) of the valve insert (15), in order to increase an external diameter and structural strength of the valve insert (15).

2. Valve cartridge according to Claim 1, **characterized in that** a valve lower part (14) is mounted and supported axially on the valve insert (15).

3. Valve cartridge according to Claim 1 or 2, **characterized in that** an insertion edge (29) for the valve body (11) is configured as a radius at the second end (15.1) of the valve insert (15).

4. Valve cartridge according to one of Claims 1 to 3, **characterized in that** the integrally moulded collar (26, 36) of the valve insert (15) is configured with connecting means (21, 22, 34, 35), in order to connect the two sides of the valve insert (15) which is configured as a slotted sleeve to one another in the region of the integrally moulded collar (26, 36).

5. Valve cartridge according to Claim 4, **characterized in that** the connecting means are configured on one side of the slot (26.1) as a pin (21) and on another side of the slot (26.1) as a corresponding hole (22) for receiving the pin (21).

6. Valve cartridge according to Claim 4, **characterized in that** the two sides of the slot (36.1) are configured as overlapping connecting means, an upper side (35) having a latching lug and a latching depression which interact with a corresponding latching lug and a corresponding latching depression of an underside (34).

7. Valve cartridge according to one of Claims 1 to 6, **characterized in that** the outer contour of the integrally moulded collar (16, 26, 36, 46, 56) is of circular or wave-like configuration.

8. Valve cartridge according to one of Claims 1 to 7, **characterized in that** the integrally moulded collar (56) is configured with a shape which protrudes out of the plane, which results in an undulating, circumferential collar (56) with a free geometry in a plan view.

9. Solenoid valve **characterized by** a valve cartridge according to one of Claims 1 to 8.

## Revendications

1. Cartouche d'électrovanne (7) pour une électrovanne (1), comprenant une capsule (7.1), une armature magnétique (4) guidée de manière mobile à l'intérieur de la capsule (7.1), un insert d'électrovanne (15) qui est inséré par une première extrémité dans la capsule (7.1) et un corps d'électrovanne (11) qui est enfoncé dans une deuxième extrémité (15.1) de l'insert d'électrovanne (15) et comprend un siège d'électrovanne principal (8), l'armature magnétique (4) déplacée par une force magnétique produite déplaçant un poussoir (12) guidé à l'intérieur de l'insert d'électrovanne (15), lequel poussoir comprend un élément de fermeture (12.1) pourvu d'un élément d'étanchéité (12.2), et l'élément d'étanchéité (12.2) plongeant hermétiquement dans le siège d'électrovanne principal (8) du corps d'électrovanne (11) pour réaliser une fonction d'étanchéité, **caractérisée en ce que** l'insert d'électrovanne (15) est réalisé sous forme de douille fendue, un rebord (16, 26, 36, 46, 56) étant moulé au niveau de la deuxième extrémité (15.1) de l'insert d'électrovanne (15), afin d'augmenter un diamètre extérieur et une tenue de forme de l'insert d'électrovanne (15).

2. Cartouche d'électrovanne selon la revendication 1, **caractérisée en ce qu'**une partie inférieure d'électrovanne (14) est appliquée et supportée axialement contre l'insert d'électrovanne (15).

3. Cartouche d'électrovanne selon la revendication 1 ou 2, **caractérisée en ce qu'**une arête d'insertion (29) pour le corps d'électrovanne (11) est réalisée sous forme de rayon au niveau de la deuxième extrémité (15.1) de l'insert d'électrovanne (15).

4. Cartouche d'électrovanne selon l'une quelconque des revendications 1 à 3, **caractérisée en ce que** le rebord moulé (26, 36) de l'insert d'électrovanne (15) est réalisé avec des moyens de liaison (21, 22, 34, 35), afin de relier l'un à l'autre, dans la région du rebord moulé (26, 36), les deux côtés de l'insert d'électrovanne (15) réalisé sous forme de douille fendue.

5. Cartouche d'électrovanne selon la revendication 4, **caractérisée en ce que** les moyens de liaison sont réalisés d'un côté de la fente (26.1) sous forme de goupille (21) et de l'autre côté de la fente (26.1) sous forme d'alésage (22) correspondant pour recevoir la goupille (21).

6. Cartouche d'électrovanne selon la revendication 4, **caractérisée en ce que** les deux côtés de la fente (36.1) sont réalisés en tant que moyens de liaison en chevauchement, un côté supérieur (35) comprenant un ergot d'encliquetage et un évidement d'encliquetage, lesquels coopèrent avec un ergot d'encliquetage correspondant et un évidement d'encliquetage correspondant d'un côté inférieur (34).

7. Cartouche d'électrovanne selon l'une quelconque des revendications 1 à 6, **caractérisée en ce que** le contour extérieur du rebord moulé (16, 26, 36, 46, 56) est circulaire ou ondulé.

8. Cartouche d'électrovanne selon l'une quelconque des revendications 1 à 7, **caractérisée en ce que** le rebord moulé (56) est réalisé de manière à présenter une forme faisant saillie hors du plan, de telle sorte qu'il en résulte un rebord périphérique ondulé (56) de géométrie libre en vue de dessus.

9. Électrovanne **caractérisée par** une cartouche d'électrovanne selon l'une quelconque des revendications 1 à 8.
